# FASCICULE DE BREVET EUROPEEN

(11) **EP 0 800 493 B1**
(45) Date de publication et mention de la délivrance du brevet: **15.03.2000**
(21) Numéro de dépôt: 95943294.9
(22) Date de dépôt: 29.12.1995
(51) Int. Cl.: C04B 28/14

(54) **MORTIER FLUIDE AUTONIVELANT COMPRENANT DU SULFATE DE CALCIUM ET DE LA CHAUX**
KALZIUMSULFAT UND KALK ENTHALTENDER SELBSTNIVELLIERENDER FLIESSMÖRTEL
SELF-LEVELLING FLUID MORTAR COMPRISING CALCIUM SULPHATE AND LIME

(30) Priorité: 30.12.1994 FR 9416038
(43) Date de publication de la demande: 15.10.1997
(73) Titulaire: RHODIA CHIMIE, 92408 Courbevoie Cédex (FR)
(72) Inventeur: FROUIN, Laurent, F-94240 L'Hay-les-Roses (FR); SARI, Mustapha, F-69100 Villeurbanne (FR)
(74) Mandataire: Dubruc, Philippe
(86) Numéro de dépôt international: FR9501758
(87) Numéro de publication internationale: WO9620901

(56) Documents cités:
- CH-A- 678 524
- DE-A- 3 232 078
- DE-A- 3 827 613
- DE-A- 3 937 431
- NL-A- 8 301 273
- CHEMICAL ABSTRACTS, vol. 106, no. 16, 20 Avril 1987 Columbus, Ohio, US; abstract no. 125059q, page 342; XP000187363 & JP,A,61 266 340 (SHIMUZU CONST CO ET AL) 26 Novembre 1986

## Description

La présente invention concerne un mortier fluide autonivelant comprenant du sulfate de calcium et de la chaux et des compositions utilisables pour la préparation dudit mortier.

Elle est également relative à des utilisations conjointes, dans le but d'influencer certaines propriétés, de chaux et soit d'une silice et d'un composé contenant de l'alumine, soit d'une pouzzolane dans un mortier fluide autonivelant et/ou dans une chape obtenue à partir d'un mortier fluide autonivelant.

Elle a trait enfin à une chape obtenue à partir de ce mortier fluide autonivelant.

On appelle mortier fluide autonivelant un mortier fluide mis en place généralement par pompage, qui permet d'obtenir, après application ou coulage sur une surface horizontale, une chape exempte d'irrégularité de surface et parfaitement horizontale sans traitement mécanique de la surface (tel que notamment un lissage) à la suite du coulage dudit mortier.

De tels mortiers sont très largement utilisés dans le domaine du bâtiment, en particulier pour rattraper les inégalités de niveau des dalles brutes de construction ou des surfaces horizontales de toute nature sur lesquelles sont disposés ensuite des revêtements de finition, tels que plancher collé, plancher supporté par des poutres en bois, dalles en matière plastique, moquette.

La surface obtenue devant être rigoureusement plane, un mortier fluide autonivelant est évidemment préférable à cause notamment de sa facilité de mise en oeuvre.

Cependant, les mortiers fluides pour chape présentent notamment l'inconvénient d'être très sensibles à l'eau et de voir diminuer nettement leur résistance mécanique lorsqu'ils sont immergés dans l'eau ou simplement mis en contact avec un tel élément.

En outre, il est important que la vitesse de prise du mortier soit rapide. D'une part, pour que la chape puisse présenter des propriétés mécaniques élevées aux jeunes âges, c'est-à-dire dans les premières heures suivant sa préparation, ce qui a pour effet de diminuer les risques de fissuration en cas de contraintes mécaniques ou thermiques. D'autre part, pour qu'il soit possible de mettre la chape en service rapidement.

L'invention a notamment pour but de proposer des mortiers fluides autonivelants ne présentant pas l'inconvénient précédemment cité.

Dans ce but, il a été trouvé, de manière surprenante, par la Demanderesse, que l'utilisation conjointe de chaux et soit d'une silice et d'un composé contenant de l'alumine, soit d'une pouzzolane, dans un mortier fluide autonivelant comprenant, en outre, du sulfate de calcium, des granulats et de l'eau, permettait de réduire considérablement la sensibilité à l'eau, c'est-à-dire d'augmenter considérablement la tenue à l'eau, d'une chape obtenue à partir dudit mortier, tout en lui procurant, de préférence, une bonne résistance mécanique (à l'air), en particulier une résistance en traction par flexion (à l'air) très satisfaisante.

Les chapes obtenues présentent d'autre part la propriété d'avoir un temps de prise très rapide et adaptable aux modes d'application utilisés.

Ainsi, l'un des objets de l'invention consiste en un mortier fluide autonivelant comprenant du sulfate de calcium, des granulats, de la chaux, de l'eau et soit au moins une silice et au moins un composé contenant de l'alumine, soit au moins une pouzzolane amorphe présentant des défauts de surface, la teneur en poids de l'ensemble silice + composé contenant de l'alumine ou de la pouzzolane par rapport au poids de sulfate de calcium étant comprise entre 2 et 10 %, de préférence entre 3 et 7 %.

Un autre objet de l'invention réside dans des compositions utilisables pour la préparation d'un mortier fluide autonivelant comprenant du sulfate de calcium, des granulats, de la chaux, de l'eau, éventuellement des granulats, et soit au moins une silice et au moins un composé contenant de l'alumine, soit au moins une pouzzolane amorphe présentant des défauts de surface, la teneur en poids de l'ensemble silice + composé contenant de l'alumine ou de la pouzzolane par rapport au poids de sulfate de calcium étant comprise entre 2 et 10 %, de préférence entre 3 et 7 %.

L'invention consiste également en l'utilisation à la fois de chaux et soit d'au moins une silice et d'au moins un composé contenant de l'alumine, soit d'au moins une pouzzolane amorphe présentant des défauts de surface, pour améliorer la résistance mécanique, en particulier la résistance en traction par flexion, et pour réduire la sensibilité à l'eau d'une chape, et en une chape obtenue à partir d'un mortier autonivelant selon l'invention.

D'autres caractéristiques, détails et avantages de l'invention apparaitront plus clairement à la lecture de la description qui va suivre.

L'invention est d'abord relative à un mortier fluide autonivelant comprenant du sulfate de calcium, des granulats (ou agrégats), de la chaux, de l'eau et soit au moins une silice et au moins un composé contenant de l'alumine, soit au moins une pouzzolane amorphe présentant des défauts de surface, la teneur en poids de l'ensemble silice + composé contenant de l'alumine ou de la pouzzolane par rapport au poids de sulfate de calcium étant comprise entre 2 et 10 %, de préférence entre 3 et 7 %.

Le mortier selon l'invention contient donc du sulfate de calcium, d'origine naturelle ou synthétique.

On peut ainsi employer un sulfate de calcium anhydre, en particulier de l'anhydrite (notamment de l'anhydrite II), et/ou un sulfate de calcium partiellement hydraté, en particulier de l'α-hémihydrate (ou semi-hydrate α).

Il est à remarquer que l'anhydrite, lorsqu'elle est d'origine synthétique, peut être sous forme de fluoro-, phospho-, sulfo- ou titano-anhydrite.

Le mortier fluide selon l'invention comprend, en général, entre 2 et 10 %, de préférence entre 3 et 7 %, en poids de chaux (par exemple de la chaux éteinte Ca(OH)₂) par rapport au poids de sulfate de calcium.

Il comprend également au moins une pouzzolane amorphe présentant des défauts de surface ou, à la fois au moins une silice et au moins un composé contenant de l'alumine.

On entend ici par pouzzolane (ou matériau pouzzolanique) un matériau siliceux et alumineux, n'ayant aucune propriété liante en lui-même, mais qui, sous certains états de cristallinité et de structure, peut réagir en présence de chaux et d'eau pour donner un ciment. Le mortier selon l'invention comprend au moins une pouzzolane amorphe présentant des défauts de surface et/ou une surface spécifique élevée. Il s'agit des pouzzolanes dont la surface contient des inclusions, des aspérités, un relief non lisse, par opposition aux pouzzolanes sans défaut de surface obtenues par exemple par trempe telles que les laitiers/scories de hauts fourneaux, les cendres volcaniques cristallisées ... Les défauts de surface et la surface spécifique peuvent être caractérisées respectivement par microscopie électronique à balayage et par des mesures de surface BET. On entend par surface BET, la surface spécifique déterminée par adsorption d'azote conformément à la norme ASTM D 3663-78 établie à partir de la méthode BRUNAUER - EMMETT - TELLER décrite dans le périodique "The Journal of the american Society", 60, 309 (1938). La surface spécifique des pouzzolanes utilisées pour la préparation des mortiers selon l'invention peut être par exemple comprise entre 5 et 20 m²/g. Les défauts de surface peuvent être dûs à un effet mécanique (broyage par exemple), thermique (calcination à une certaine température) ou physico-chimique (altérations ponctuelles des grains constitutifs de la pouzzolane par un composé chimique).

On peut citer, à titre d'exemples de pouzzolanes utilisables, le méta-kaolin, les argiles calcinées, les cendres volantes végétales (cendres de balles de riz par exemple), les boues calcinées (notamment les boues rouges de fabrication d'aluminium, les boues de papèterie), les cendres volcaniques amorphes. De préférence, on emploie dans la présente invention le méta-kaolin comme pouzzolane.

On utilise à titre de silice généralement une silice très fine.

On emploie ainsi une silice de précipitation ou la fumée de silice.

L'alumine contenue dans le composé utilisé en association avec la silice doit être réactive.

Comme composé contenant de l'alumine, on peut employer de l'alumine, des cendres volantes alumineuses ou silico-alumineuses, un ciment (contenant de l'alumine), notamment un ciment alumineux (par exemple du type Sécar) ou du Ciment Portland (en particulier du Ciment Portland Artificiel (CPA)).

Cependant, dans le cas où l'on utilise, comme composé contenant de l'alumine, un ciment à haute teneur en alumine, par exemple un ciment alumineux, ce composé doit être présent dans le mortier selon l'invention de préférence à une teneur en poids d'au plus 5 % par rapport au poids de sulfate de calcium, notamment pour éviter une expansion incontrôlée de la chape qui sera obtenue à partir dudit mortier.

Il est à noter qu'un mortier fluide comprenant à la fois au moins une pouzzolane, au moins une silice et au moins un composé contenant de l'alumine (et les autres composés décrits dans le présent exposé) reste dans le cadre de la présente invention, même s'il n'en constitue pas une variante très préférée.

Le mortier fluide selon l'invention présente en général un rapport en poids granulats/sulfate de calcium compris entre 1 et 6, par exemple entre environ 1,2 et 2,0.

Il contient préférentiellement du sable, par exemple du sable siliceux, à titre de granulats.

La quantité d'eau (dite eau de gâchage) présente dans le mortier fluide selon l'invention est habituellement comprise entre 30 et 60 %, par exemple entre 35 et 50 %, en poids par rapport au poids de sulfate de calcium.

Le mortier fluide selon l'invention peut comprendre en outre au moins un accélérateur de prise.

La quantité dudit accélérateur de prise dans ledit mortier est alors en général comprise entre 0,5 et 5 %, de préférence entre 1 et 2,5 %, en poids par rapport au poids de sulfate de calcium.

On peut utiliser, comme accélérateur de prise, du sulfate de potassium.

Lorsque ledit mortier contient de l'anhydrite comme sulfate de calcium, il peut comprendre, à titre d'accélérateur de prise, de l'a-hémihydrate, de préférence en une quantité comprise entre 0,5 et 5 %, de préférence entre 1 et 2,5 % en poids par rapport au poids d'anhydrite.

Le mortier fluide selon l'invention peut contenir en outre au moins un fluidifiant, généralement entre 0,1 et 2,0 %, en particulier entre 0,1 et 1,0 %, en poids par rapport au poids de sulfate de calcium.

On peut citer, à titre d'exemples de fluidifiants, les mélamines, les polymélamines, les polynaphtalènes (notamment le polynaphtalène sulfonate de sodium), les polyacrylates (notamment le polyacrylate de sodium), les lignosulfonates.

Le mortier fluide selon l'invention est en général préparé par malaxage des produits entrant dans sa constitution (opération de gâchage) ; l'ordre d'introduction desdits produits dans le malaxeur peut être quelconque.

On peut préalablement mélanger intimement, à sec, la chaux, soit la silice et le composé contenant de l'alumine soit la pouzzolane (soit, éventuellement, ces trois composés), et les éventuels accélérateur de prise et/ou fluidifiant, avec le sulfate de calcium ; on obtient alors, et ceci constitue un objet de l'invention, une composition utilisable (en particulier sur le chantier) pour la préparation d'un mortier fluide autonivelant, composition qui présente la même formulation (ou constitution) que le mortier fluide, selon l'invention, décrit précédemment, excepté que ladite composition ne comprend ni eau ni granulats ; cette composition est ensuite introduite dans l'eau de gâchage ; on malaxe ensuite l'ensemble obtenu, en général à petite vitesse (par exemple entre 50 et 70 tours/min) ; enfin, on ajoute progressivement les granulats et on poursuit le malaxage à grande vitesse (par exemple entre 100 et 140 tours/min).

On peut aussi préalablement mélanger intimement, à sec, la chaux, soit la silice et le composé contenant de l'alumine soit la pouzzolane (soit, éventuellement, ces trois composés), et les éventuels accélérateur de prise et/ou fluidifiant, avec les granulats et le sulfate de calcium ; on obtient alors, et ceci constitue un autre objet de l'invention, une composition utilisable (en particulier sur le chantier) pour la préparation d'un mortier fluide autonivelant, composition qui présente la même formulation (ou constitution) que le mortier fluide, selon l'invention, décrit précédemment, excepté que ladite composition ne comprend pas d'eau ; il suffit ensuite d'introduire cette composition dans l'eau de gâchage et de malaxer l'ensemble obtenu, en général à grande vitesse.

La présence conjointe de chaux et soit d'au moins une silice et d'au moins un composé contenant de l'alumine, soit d'au moins une pouzzolane amorphe présentant des défauts de surface, dans le mortier selon l'invention permet d'augmenter (dans l'air) la résistance mécanique, en particulier surtout la résistance en traction par flexion, de la chape obtenue à partir dudit mortier.

Cette chape présente ainsi un rapport résistance en traction par flexion/résistance en compression simple assez élevé (par exemple d'au moins 30 %) et, de préférence, plus élevé que celui des chapes traditionnelles (rapport de l'ordre de 15 à 20 % en général), ce qui est favorable notamment dans le cas des ouvrages essentiellement soumis à des chargements engendrant des contraintes du type traction par flexion.

La résistance en traction par flexion d'une éprouvette correspond en général à la charge nécessaire pour casser une éprouvette placée sur une tête à 3 points.

La résistance en compression simple d'une éprouvette correspond habituellement à la pression nécessaire pour faire éclater une éprouvette que l'on compresse entre deux machoires.

Le mortier selon l'invention présente aussi l'avantage de conduire à des temps de prise courts ce qui permet d'obtenir des propriétés mécaniques nettement améliorées par rapport aux mortiers de l'art antérieur.

L'invention concerne ainsi également l'utilisation, pour augmenter la résistance mécanique, en particulier la résistance en traction par flexion, de manière conjointe de chaux et soit d'au moins une silice et d'au moins un composé contenant de l'alumine, soit d'au moins une pouzzolane amorphe présentant des défauts de surface, dans une chape obtenue à partir d'un mortier fluide autonivelant comprenant, en outre, du sulfate de calcium, des granulats et de l'eau, la teneur en poids de l'ensemble silice + composé contenant de l'alumine ou de la pouzzolane par rapport au poids de sulfate de calcium étant comprise entre 2 et 10 %, de préférence entre 3 et 7 %.

De plus, et ceci est le plus remarquable, la présence conjointe de chaux et soit d'au moins une silice et d'au moins un composé contenant de l'alumine, soit d'au moins une pouzzolane, dans le mortier selon l'invention permet de réduire nettement la sensibilité à l'eau (c'est-à-dire d'augmenter nettement la tenue à l'eau) de la chape obtenue à partir dudit mortier.

Cette chape conserve ainsi après immersion dans l'eau (ou simplement mise en contact avec un tel élément) une résistance mécanique tout à fait convenable. En particulier, après immersion dans l'eau :
- d'une part, elle perd seulement un peu de sa résistance en traction par flexion, par rapport à celle obtenue après conservation à l'air (par exemple, pour des cycles d'immersion (5 jours) / séchage (1 jour à 50 °C), elle peut ne perdre (par rapport à sa résistance en traction par flexion après conservation à l'air) qu'aux environs de 10 % à une échéance de 28 jours), contrairement aux chapes traditionnelles (pour lesquelles généralement la perte (par rapport à leur résistance en traction par flexion après conservation à l'air) est alors d'environ 40 % ou plus à une échéance de 28 jours) ;
- d'autre part, elle gagne sensiblement en résistance en compression simple, par rapport à celle obtenue après conservation à l'air (par exemple, pour des cycles d'immersion (5 jours) / séchage (1 jour à 50 °C), gain possible (par rapport à sa résistance en compression simple après conservation à l'air) d'au moins 20 % à une échéance de 28 jours), contrairement aux chapes traditionnelles, pour lesquelles il y a une perte en résistance en compression simple par rapport à celle obtenue après conservation à l'air (par exemple perte en général de plus de 10 % à une échéance de 28 jours).

Ainsi, l'invention est aussi relative à l'utilisation, pour réduire la sensibilité à l'eau, de manière conjointe de chaux et soit d'au moins une silice et d'au moins un composé contenant de l'alumine, soit d'au moins une pouzzolane amorphe présentant des défauts de surface, dans une chape obtenue à partir d'un mortier fluide autonivelant comprenant, en outre, du sulfate de calcium, des granulats et de l'eau, la teneur en poids de l'ensemble silice + composé contenant de l'alumine ou de la pouzzolane par rapport au poids de sulfate de calcium étant comprise entre 2 et 10 %, de préférence entre 3 et 7 %.

Dans toutes ces utilisations, le mortier fluide est tel que défini plus haut.

La chape obtenue à partir du mortier fluide selon l'invention, notamment par coulage de celui-ci sur une surface horizontale, constitue un autre objet de l'invention.

### EXEMPLE

On prépare un mortier fluide selon l'invention (mortier 1) comprenant pour 100 parties en poids de calcium anhydre CaSO4 II (fluoro-anhydrite d'Avonmouth commercialisée par Rhône-Poulenc Chemicals) :
- 5 parties de ciment Portland (composé contenant de l'alumine)
- 2,5 parties de chaux Ca(OH)₂
- 2,5 parties de fumée de silice
- 150 parties de sable de Leucate
- 37 parties d'eau.

On prépare un mortier fluide (mortier 2) comprenant pour 100 parties en poids de calcium anhydre CaSO4 II (fluoro-anhydrite d'Avanmouth commercialisée par Rhône-Poulenc Chemicals) :
- 5 parties de laitier de hauts fourneaux amorphe commercialisé par la société "Ciments Français"
- 2,5 parties de chaux Ca(OH)₂
- 2,5 parties de fumée de silice
- 150 parties de sable de Leucate
- 37 parties d'eau.

Ces mortiers sont obtenus par malaxage intime dans un malaxeur de type Hobart, la durée totale de malaxage étant de 3 à 5 min.

### Suivi de la cinétique de prise des mortiers fluides

Un suivi de la cinétique de prise a été effectuée à l'aiguille de Vicat, sous une température de 20°C et une hygrométrie de 60 % d'humidité relative.

On constate que le début de prise du mortier 1 selon l'invention à l'aiguille de Vicat se produit au bout de 4 h 50 min et la fin de prise au bout de 6 h 45, soit un temps de durcissement d'environ 2 h.

Dans le cas du mortier 2, le début de prise est enregistré au bout de 7 h 25, la fin de prise étant atteinte au bout de 11 h 15, soit un temps de durcissement d'environ 4 h.

Les délais de prise sont donc nettement plus longs dans le cas de la formulation à base de laitiers de hauts fourneaux, ce qui rend le mortier sensible au risque de fissuration si la résistance n'est pas suffisament élevée aux jeunes âges. Par ailleurs, on note l'apparition systématique d'efflorescences blanchâtres sur les éléments réalisés à partir de la formulation à base de laitiers de hauts fourneaux, ce qui nécessitera obligatoirement un brossage de la chape en cas de pose de revêtement et au moins un dépoussiérage si la chape devait rester nue.

### Performances mécaniques aux jeunes âges

On réalise à partir des mortiers 1 et 2 des éprouvettes normalisées 4X4X16 cm3 par séries de trois. Le démoulage est effectué soit à 16 h, soit à 20 ou 24 h, la conservation ayant eu lieu à 20°C et sous 60 % d'humidité relative.

On mesure la résistance en compression simple d'une éprouvette ce qui correspond à la pression nécessaire pour faire éclater une éprouvette que l'on compresse entre deux machoires (= contrainte de rupture).

Les mesures sont rassemblées sur le tableau 1.

Le mortier 1 selon l'invention présente durant les 20 premières heures systématiquement une résistance à la compression simple plus élevée que celle du mortier 2. Cette caractéristique confère au mortier 1 une plus faible probabilité de fissuration en cas de retrait généré par les conditions environnantes (température, hygrométrie, courants d'air, exposition au soleil, ...).

**Tableau 1**

| | Mortier 1 | Mortier 2 |
|---|---|---|
| Contrainte de rupture (MPa) à 16 h | 5,2 | 3,4 |
| Contrainte de rupture (MPa) à 20 h | 7,7 | 5,8 |
| Contrainte de rupture (MPa) à 24 h | 17,8 | 17,8 |

## Revendications

1. Mortier fluide autonivelant caractérisé en ce qu'il comprend du sulfate de calcium, des granulats, de la chaux, de l'eau et
- soit :
. au moins une silice choisie parmi les silices de précipitation et les fumées de silice,
. et au moins un composé contenant de l'alumine réactive,
- soit au moins une pouzzolane amorphe présentant des défauts de surface choisie parmi le méta-kaolin, les argiles calcinées, les cendres volantes végétales, les boues calcinées, les cendres volcaniques amorphes,
la teneur en poids de l'ensemble silice + composé contenant de l'alumine ou de la pouzzolane par rapport au poids de sulfate de calcium étant comprise entre 2 et 10 %, de préférence entre 3 et 7 %.

2. Mortier fluide selon la revendication 1, caractérisé en ce que le composé contenant de l'alumine réactive est choisi parmi l'alumine, les cendres volantes alumineuses ou silico-alumineuses, les ciments contenant de l'alumine.

3. Mortier fluide selon l'une des revendications 1 à 2, caractérisé en ce qu'il comprend entre 2 et 10 %, de préférence entre 3 et 7 %, en poids de chaux par rapport au poids de sulfate de calcium.

4. Mortier fluide selon l'une des revendications 1 à 3, caractérisé en ce qu'il comprend entre 30 et 60 %, de préférence entre 35 et 50 %, en poids d'eau par rapport au poids de sulfate de calcium.

5. Mortier fluide selon l'une des revendications 1 à 4 caractérisé en ce qu'il présente un rapport en poids granulats/sulfate de calcium compris entre 1 et 6, de préférence entre environ 1,2 et 2,0.

6. Mortier fluide selon l'une des revendications 1 à 5, caractérisé en ce qu'il comprend du sable comme granulats.

7. Mortier selon l'une des revendications 1 à 6, caractérisé en ce qu'il comprend, comme sulfate de calcium, du sulfate de calcium anhydre, tel que de l'anhydrite, ou du sulfate de calcium partiellement hydraté, tel que de l'α-hémihydrate.

8. Mortier fluide selon l'une des revendications 1 à 7, caractérisé en ce qu'il comprend au moins un accélérateur de prise.

9. Mortier fluide selon la revendication 8, caractérisé en ce qu'il comprend entre 0,5 et 5 %, de préférence entre 1 et 2,5 %, en poids d'accélérateur de prise par rapport au poids de sulfate de calcium.

10. Mortier fluide selon l'une des revendications 8 ou 9, caractérisé en ce qu'il comprend de l'anhydrite comme sulfate de calcium et de l'α-hémihydrate comme accélérateur de prise.

11. Mortier fluide selon l'une des revendications 1 à 10, caractérisé en ce qu'il comprend au moins un fluidifiant.

12. Composition utilisable pour la préparation d'un mortier fluide autonivelant, caractérisée en ce qu'elle présente la même formulation que le mortier fluide selon l'une des revendications 1 à 11, excepté que ladite composition ne comprend ni eau ni granulats.

13. Composition utilisable pour la préparation d'un mortier fluide autonivelant, caractérisée en ce qu'elle présente la même formulation que le mortier fluide selon l'une des revendications 1 à 11, excepté que ladite composition ne comprend pas d'eau.

14. Utilisation, pour augmenter la résistance mécanique, en particulier la résistance en traction par flexion, à la fois de chaux et
- soit :
. au moins une silice choisie parmi les silices de précipitation et les fumées de silice,
. et au moins un composé contenant de l'alumine réactive,
- soit au moins une pouzzolane amorphe présentant des défauts de surface choisie parmi le méta-kaolin, les argiles calcinées, les cendres volantes végétales, les boues calcinées, les cendres volcaniques amorphes,
dans une chape obtenue à partir d'un mortier fluide autonivelant comprenant, en outre, du sulfate de calcium, des granulats et de l'eau, la teneur en poids de l'ensemble silice + composé contenant de l'alumine ou de pouzzolane par rapport au poids de sulfate de calcium étant comprise entre 2 et 10 %, de préférence entre 3 et 7 %.

15. Utilisation, pour réduire la sensibilité à l'eau, à la fois de chaux et
- soit :
. au moins une silice choisie parmi les silices de précipitation et les fumées de silice,
. et au moins un composé contenant de l'alumine réactive,
- soit au moins une pouzzolane amorphe présentant des défauts de surface choisie parmi le méta-kaolin, les argiles calcinées, les cendres volantes végétales, les boues calcinées, les cendres volcaniques amorphes,
dans une chape obtenue à partir d'un mortier fluide autonivelant comprenant, en outre, du sulfate de calcium, des granulats et de l'eau, la teneur en poids de l'ensemble silice + composé contenant de l'alumine ou de pouzzolane par rapport au poids de sulfate de calcium étant comprise entre 2 et 10 %, de préférence entre 3 et 7 %.

16. Utilisation selon l'une des revendications 14 ou 15, à la fois de chaux, d'au moins un accélérateur de prise et soit d'au moins une silice et d'au moins un composé contenant de l'alumine réactive, soit d'au moins une pouzzolane amorphe présentant des défauts de surface.

17. Utilisation selon l'une des revendications 14 à 16, ledit mortier fluide étant défini selon l'une des revendications 1 à 11.

18. Chape obtenue à partir d'un mortier fluide selon l'une des revendications 1 à 11.

## Patentansprüche

1. Selbstnivellierender flüssiger Mörtel, dadurch gekennzeichnet, daß er Calciumsulfat, Zuschlagstoffe, Kalk und Wasser enthält und
- entweder:
- mindestens eine Kieselerde gewählt aus Fällungskieselsäure und Kieselsäurerauch und
- mindestens eine ein aktives Aluminiumoxid enthaltende Verbindung,
- oder mindestens ein Oberflächenfehler aufweisendes amorphes Puzzolan, gewählt aus Meta-Kaolin, gebrannten Tonen, pflanzlichen Flugaschen, calcinierten Schlämmen und amorpher Vulkanasche,
wobei der Gewichtsanteil der Gesamtheit von Kieselsäure + Aluminiumoxid oder Puzzolan enthaltender Verbindung, bezogen auf das Gewicht des Calciumsulfats, zwischen 2 und 10 %, vorzugsweise zwischen 3 und 7 %, liegt.

2. Flüssiger Mörtel nach Anspruch 1, dadurch gekennzeichnet, daß die ein aktives Aluminiumoxid enthaltende Verbindung aus Aluminiumoxid, tonerdehaltigen oder tonerdesilicathaltigen Flugaschen und Aluminiumoxid enthaltendem Zement gewählt ist.

3. Flüssiger Mörtel nach Anspruch 1 oder 2, dadurch gekennzeichnet, daß er 2 bis 10 Gew.-%, vorzugsweise 3 bis 7 Gew.-%, Kalk, bezogen auf das Gewicht des Calciumsulfats, enthält.

4. Flüssiger Mörtel nach einem der Ansprüche 1 bis 3, dadurch gekennzeichnet, daß er 30 bis 60 Gew.-%, vorzugsweise 35 bis 50 Gew.-%, Wasser, bezogen auf das Gewicht des Calciumsulfats, enthält.

5. Flüssiger Mörtel nach einem der Ansprüche 1 bis 4, dadurch gekennzeichnet, daß er ein Gewichtsverhältnis Zuschlagstoffe/Calciumsulfat zwischen 1 und 6, vorzugsweise zwischen ungefähr 1,2 und 2,0, aufweist.

6. Flüssiger Mörtel nach einem der Ansprüche 1 bis 5, dadurch gekennzeichnet, daß er als Zuschlagstoffe Sand enthält.

7. Flüssiger Mörtel nach einem der Ansprüche 1 bis 6, dadurch gekennzeichnet, daß er als Calciumsulfat wasserfreies Calciumsulfat, wie z.B. Anhydrit, oder partiell hydratisierendes Calciumsulfat, wie z.B. α-Hemihydrat, enthält.

8. Flüssiger Mörtel nach einem der Ansprüche 1 bis 7, dadurch gekennzeichnet, daß er mindestens einen Abbindebeschleuniger enthält.

9. Flüssiger Mörtel nach Anspruch 8, dadurch gekennzeichnet, daß er bezogen auf das Gewicht des Calciumsulfats 0,5 bis 5 Gew.-%, vorzugsweise 1 bis 2,5 Gew.-%, Abbindebeschleuniger enthält.

10. Flüssiger Mörtel nach Anspruch 8 oder 9, dadurch gekennzeichnet, daß er Anhydrit als Calciumsulfat und α-Hemihydrat als Abbindebeschleuniger enthält.

11. Flüssiger Mörtel nach einem der Ansprüche 1 bis 10, dadurch gekennzeichnet, daß er mindestens einen Verflüssiger enthält.

12. Zusammensetzung, die zur Herstellung eines flüssigen und selbst-nivellierenden Mörtels verwendet werden kann, dadurch gekennzeichnet, daß sie dieselbe Rezeptur aufweist, wie der flüssige Mörtel nach einem der Ansprüche 1 bis 11, abgesehen davon, daß die genannte Zusammensetzung weder Wasser noch Zuschlagstoffe enthält.

13. Zusammensetzung, die zur Herstellung eines flüssigen und selbst-nivellierenden Mörtels verwendet werden kann, dadurch gekennzeichnet, daß sie dieselbe Rezeptur aufweist wie der flüssige Mörtel nach einem der Ansprüche 1 bis 11, abgesehen davon, daß die genannte Zusammensetzung kein Wasser enthält.

14. Verwendung zum Erhöhen der mechanischen Widerstandsfähigkeit, insbesondere der Zugbiegefestigkeit, von gleichzeitig Kalk und
- entweder:
- mindestens einer Kieselerde gewählt aus Fällungskieselsäure und Kieselsäurerauch und
- mindestens einer ein aktives Aluminiumoxid enthaltenden Verbindung,
- oder mindestens ein Oberflächenfehler aufweisendes amorphes Puzzolan, gewählt aus Meta-Kaolin, gebrannten Tonen, pflanzlichen Flugaschen, calcinierten Schlämmen und amorpher Vulkanasche,
in einem Mörtelbett, das aus flüssigem und sich selbstnivellierendem Mörtel entstanden ist und darüber hinaus Calciumsulfat, Zuschlagstoffe und Wasser enthält, wobei der Gewichtsanteil der Gesamtheit von Kieselerde + Aluminiumoxid oder Puzzolan enthaltender Verbindung, bezogen auf das Gewicht des Calciumsulfats, zwischen 2 und 10 %, vorzugsweise zwischen 3 und 7 %, liegt.

15. Verwendung zum Verringern der Wasserempfindlichkeit von gleichzeitig Kalk und
- entweder:
- mindestens einer Kieselerde gewählt aus Fällungskieselsäure und Kieselsäurerauch und
- mindestens einer ein aktives Aluminiumoxid enthaltenden Verbindung,
- oder mindestens ein Oberflächenfehler aufweisendes amorphes Puzzolan, gewählt aus Meta-Kaolin, gebrannten Tonen, pflanzlichen Flugaschen, calcinierten Schlämmen und amorpher Vulkanasche,
in einem Mörtelbett, das aus flüssigem und selbstnivellierendem Mörtel entstanden ist und darüber hinaus Calciumsulfat, Zuschlagstoffe und Wasser enthält, wobei der Gewichtsanteil der Gesamtheit von Kieselsäure + Aluminiumoxid oder Puzzolan enthaltender Verbindung, bezogen auf das Gewicht des Calciumsulfats, zwischen 2 und 10 %, vorzugsweise zwischen 3 und 7 %, liegt.

16. Verwendung nach Anspruch 14 oder 15, von gleichzeitig Kalk und mindestens einem Abbindebeschleuniger sowie entweder mindestens einer Kieselerde und mindestens einer ein aktives Aluminiumoxid enthaltenden Verbindung oder mindestens ein Oberflächenfehler aufweisendes amorphes Puzzolan.

17. Verwendung nach einem der Ansprüche 14 bis 16, wobei der genannte flüssige Mörtel durch einen der Ansprüche 1 bis 11 bestimmt ist.

18. Mörtelbett, das aus einem flüssigen Mörtel nach einem der Ansprüche 1 bis 11 erhalten worden ist.

## Claims

1. Self-levelling fluid mortar characterized in that it includes calcium sulphate, granulates, lime, water and
- either:
• at least one silica chosen from precipitation silicas and pyrogenic silicas,
• and at least one compound containing reactive alumina,
- or at least one amorphous pozzuolana exhibiting surface defects chosen from meta-kaolin, calcined clays, vegetable fly ash, calcined slurries and amorphous volcanic ash,
the weight content of the combination of silica + compound containing alumina or pozzuolana, relative to the weight of calcium sulphate being between 2 and 10 %, preferably between 3 and 7 %.

2. Fluid mortar according to claim 1,
characterized in that the compound containing reactive alumina is chosen from alumina, aluminous fly ash or silico-aluminous fly ash and cements containing alumina.

3. Fluid mortar according to either of claims 1 and 2, characterized in that it includes between 2 and 10 %, preferably between 3 and 7 %, by weight of lime relative to the weight of calcium sulphate.

4. Fluid mortar according to one of claims 1 to 3, characterized in that it includes between 30 and 60 %, preferably between 35 and 50 %, by weight of water relative to the weight of calcium sulphate.

5. Fluid mortar according to one of claims 1 to 4, characterized in that it has a granulates/calcium sulphate weight ratio of between 1 and 6, preferably between approximately 1.2 and 2.0.

6. Fluid mortar according to one of claims 1 to 5, characterized in that it includes sand as granulates.

7. Mortar according to one of claims 1 to 6, characterized in that it includes, as calcium sulphate, anhydrous calcium sulphate, such as anhydrite, or partially hydrated calcium sulphate, such as α-hemihydrate.

8. Fluid mortar according to one of claims 1 to 7, characterized in that it includes at least one setting-accelerator.

9. Fluid mortar according to claim 8,
characterized in that it includes between 0.5 and 5 %, preferably between 1 and 2.5 %, by weight of setting-accelerator relative to the weight of calcium sulphate.

10. Fluid mortar according to either of claims 8 and 9, characterized in that it includes anhydrite as calcium sulphate and α-hemihydrate as setting-accelerator.

11. Fluid mortar according to one of claims 1 to 10, characterized in that it includes at least one plasticizer.

12. Composition which can be employed for the preparation of a self-levelling fluid mortar,
characterized in that it has the same formulation as the fluid mortar according to one of claims 1 to 11, except that the said composition includes neither water nor granulates.

13. Composition which can be employed for the preparation of a self-levelling fluid mortar,
characterized in that it has the same formulation as the fluid mortar according to one of claims 1 to 11, except that the said composition does not include water.

14. Use, in order to increase the mechanical strength, in particular the flexural tensile strength, at the same time of lime and
- either:
• at least one silica chosen from precipitation silicas and pyrogenic silicas,
• and at least one compound containing reactive alumina,
- or at least one amorphous pozzuolana exhibiting surface defects, chosen from meta-kaolin, calcined clays, vegetable fly ash, calcined slurries and amorphous volcanic ash,
in a screed obtained from a self-levelling fluid mortar additionally including calcium sulphate, granulates and water, the weight content of the combination of silica + compound containing alumina or pozzuolana relative to the weight of calcium sulphate being between 2 and 10 %, preferably between 3 and 7 %.

15. Use, in order to reduce water sensitivity, at the same time of lime and
- either:
• at least one silica chosen from precipitation silicas and pyrogenic silicas,
• and at least one compound containing reactive alumina,
- or at least one amorphous pozzuolana exhibiting surface defects, chosen from meta-kaolin, calcined clays, vegetable fly ash, calcined slurries and amorphous volcanic ash,
in a screed obtained from a self-levelling fluid mortar additionally including calcium sulphate, granulates and water, the weight content of the combination of silica + compound containing alumina or pozzuolana relative to the weight of calcium sulphate being between 2 and 10 %, preferably between 3 and 7 %.

16. Use according to either of claims 14 and 15, at the same time of lime, of at least one setting-accelerator and either of at least one silica and of at least one compound containing reactive alumina or of at least one amorphous pozzuolana exhibiting surface defects.

17. Use according to one of claims 14 to 16, the said fluid mortar being defined according to one of claims 1 to 11.

18. Screed obtained from a fluid mortar according to one of claims 1 to 11.
